# EUROPEAN PATENT SPECIFICATION

(11) **EP 1 394 731 B1**
(45) Date of publication and mention of the grant of the patent: **18.02.2009**
(21) Application number: 03019859.2
(22) Date of filing: 01.09.2003
(51) Int. Cl.: G06K 13/08

(54) **Memory Card Connector**
Speicherkartenverbinder
Connecteur de carte à mémoire

(30) Priority: 30.08.2002 JP 2002256196; 30.08.2002 JP 2002256197
(43) Date of publication of application: 03.03.2004
(73) Proprietor: Mitsumi Electric Co., Ltd., Tama-Shi, Tokyo (JP)
(72) Inventor: Nishio, Atsushi, Mito-shi, Ibaraki (JP); Kawasaki, Takashi, Mito-shi, Ibaraki (JP); Okazaki, Kazuhiro, Mito-shi, Ibaraki (JP)
(74) Representative: Grünecker, Kinkeldey, Stockmair & Schwanhäusser Anwaltssozietät

(56) References cited:
- EP-A- 1 193 807
- WO-A-01/89041
- US-A1- 2002 052 132
- US-A1- 2002 101 722
- US-B1- 6 332 790

## Description

### BACKGROUND OF THE INVENTION

The present invention relates to an inserting and extracting mechanism of a memory card connector, and more particularly to the inserting and extracting mechanism of the memory card connector for preventing damage of the mechanism in case where the memory card is inserted in a wrong direction by mistake and in case where the memory card is extracted by mistake.

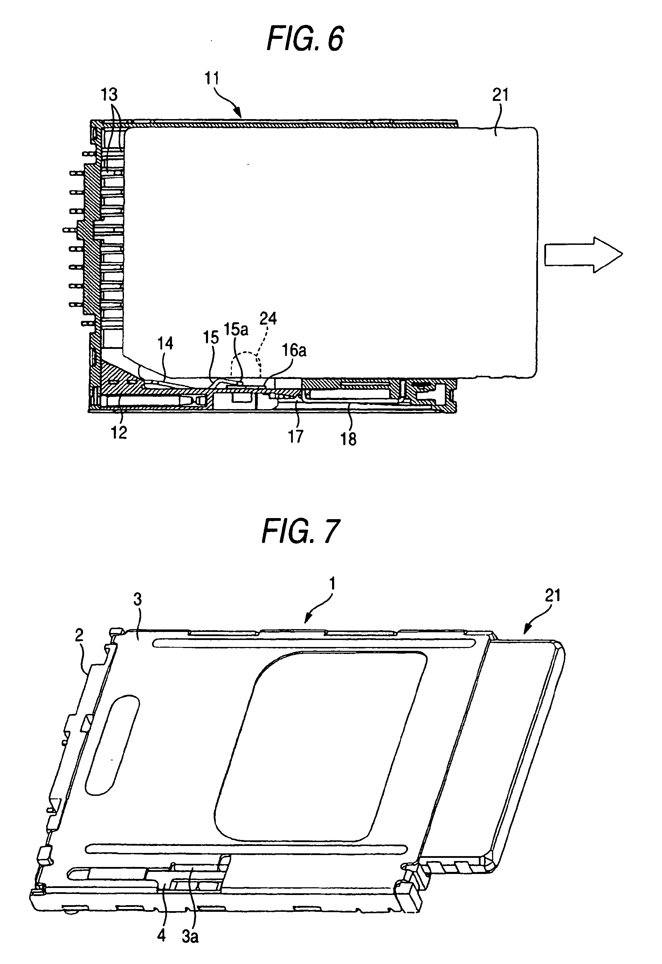

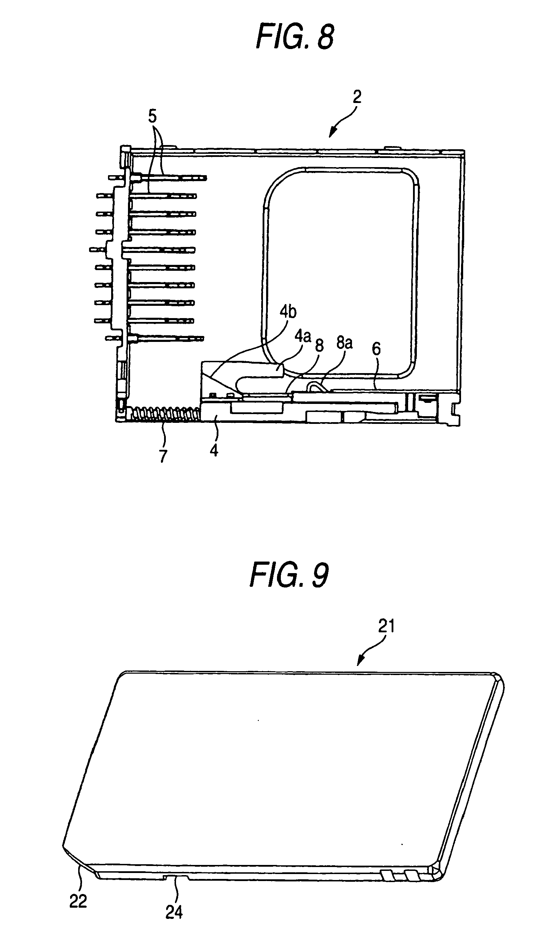

A related memory card connector will be described referring to the drawings. Fig. 7 shows a memory card connector 1 in a state where a memory card 21 is inserted therein. The memory card connector 1 includes a base frame 2 made of resin, and a top cover 3 which is made of metal and engaged with the base frame 2 to form a box-like body. Fig. 8 shows the base frame 2 having a slider 4, and contact pins 5 which are arranged in a rear part (at a left side in Fig. 8) of the base frame 2 in parallel, according to an arrangement of terminals in the memory card 21. A slider guide 6 is formed near a left edge (at a lower side in Fig. 8) of the base frame 2, and the slider 4 is interposed between the slider guide 6 and the left side wall (not shown) of the top cover 3 to be guided along them. The slider 4 is held in its initial advanced position as illustrated, by means of a helical compression spring 7 which is inserted between a back wall face of the base frame 2 and the slider 4. A catch spring 8 attached to the slider 4 has a catching portion 8a in an arc shape which is formed by stamping, at its distal end. The catching portion 8a protrudes into an interior space of the memory card connector 1.

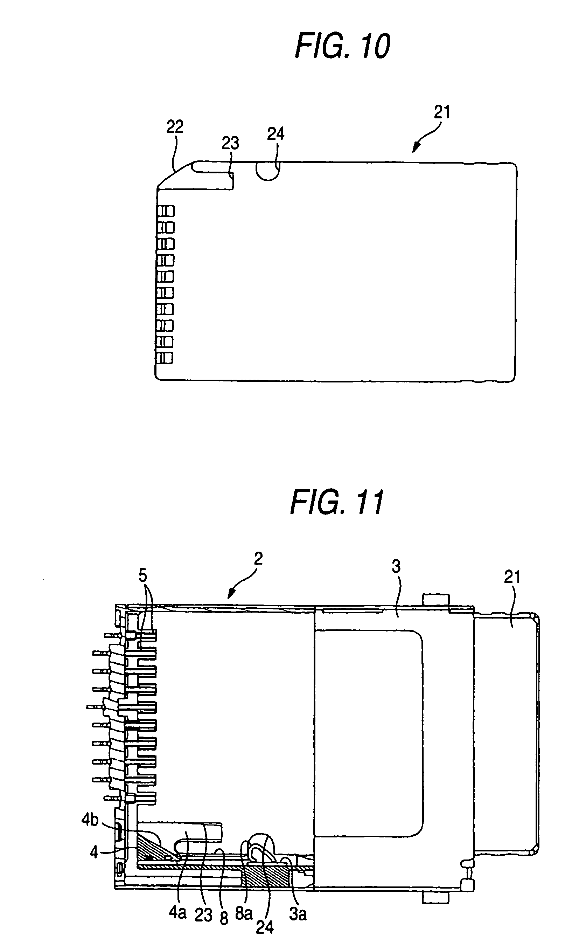

Figs. 9 and 10 show the memory card 21, which has such a shape that its forward left end corner is diagonally cut away in order to restrict an inserting direction. As shown in Fig. 10, the memory card 21 is provided with a groove 23 in a longitudinal direction behind a diagonal face 22 at the forward left end, and a recess 24 in a semicircular shape on a left side face. As shown in Fig. 8, the slider 4 in the memory card connector 1 has such a shape as matching the diagonal face 22 and the groove 23 of the memory card 21. Therefore, when the memory card 21 is inserted into the memory card connector in a proper direction, an arm portion 4a of the slider 4 intrudes into the groove 23 of the memory card 21, and the catching portion 8a of the catch spring 8 comes into engagement with the recess 24 of the memory card 21. At the same time, the diagonal face 22 of the memory card 21 is abutted against a triangular plate portion 4b of the slider 4, and the slider 4 will be pushed by the memory card 21 to retreat.

Fig. 11 shows the memory card 21 in a state inserted in the memory card connector 1. Contacts of the memory card 21 are in contact with the contact pins 5 of the memory card connector 1, while the catching portion 8a of the catch spring 8 is restricted from outward movement by a lock plate 3a provided on the top cover 3, and held in a state engaged with the recess 24 of the memory card 21. Although not shown in the drawings, the memory card connector 1 is provided with a known slider lock mechanism which includes a heart-shaped groove cam formed on a back side face of the slider 4 and a lock pin provided on the base frame 2. The lock pin moves along the heart-shaped groove cam according to a longitudinal movement of the slider 4, and when the slider 4 has retreated to a locked position, the lock pin is engaged with a recess of the heart-shaped groove cam thereby to lock the slider 4 in the locked position. In order to detach the memory card 21, the memory card 21 is pushed into the depth, and the lock pin will be disengaged from the recess of the heart-shaped groove cam to unlock the slider 4. Then, the slider will move forward by means of the helical-compression spring, and the memory card 21 will be discharged.

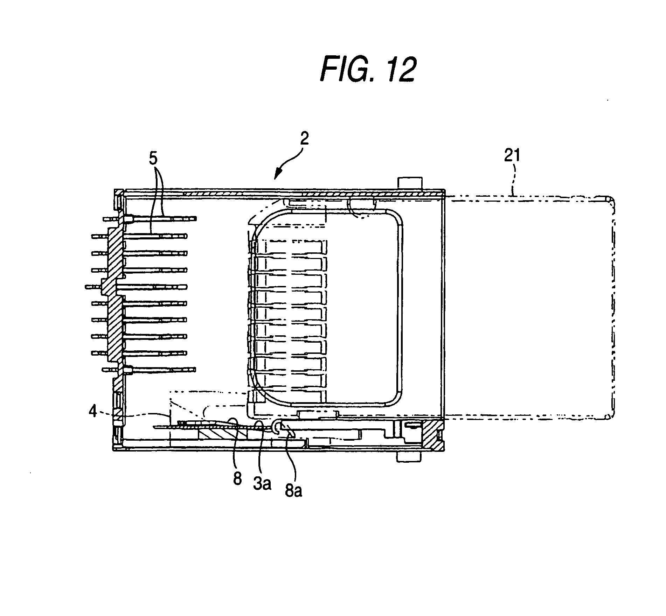

In the above description, the case where the memory card 21 is inserted in the proper direction is explained. However, in case where the memory card 21 is inserted in an opposite direction, the slider 4 retreats in a state where the catch spring 8 is pressed with a side face of the memory card 21 to be flexed outwardly as shown in Fig. 12, and the catching portion 8a of the catch spring 8 is abutted against the lock plate 3a of the top cover 3 to stop the slider 4. When the memory card 21 is further pushed, the catch spring 8 may drop from the slider 4, or the catching portion 8a may be bent and jammed between the memory card 21 and the lock plate 3a, and in some cases, the catch spring 8 may be broken. When the memory card 21 is still further pushed, the memory card 21 will strike the contact pins 5, and the contact pins 5 may be broken in some cases.

Also, it may occur that a user who does not realize the above described steps of proper detaching operation attempts to detach the memory card 21 which is inserted in the memory card connector and pulls the memory card 21. On this occasion, longitudinally opposite ends of the arc-shaped catching portion 8a of the catch spring 8 are in contact with the lock plate 3a provided outside, as shown in Fig. 10 and the catching portion 8a can be hardly flexed. Consequently, it happens that the catching portion 8a may be bent, the catch spring 8 may drop, or further, the slider 4 which is locked may be pulled with force, resulting in damages of the groove cam and the lock pin in the slider lock mechanism.

WO 01/89041 discloses a prior art card connector.

### SUMMARY OF THE INVENTION

It is therefore an object of the present invention to provide a memory card connector in which an accident of damaging the memory card connector in case where the memory card is inserted in an opposite direction is prevented.

Also, another object of the present invention is to provide a memory card connector in which an accident of damaging the memory card connector in case where the memory card which is inserted into the memory card connector is pulled is prevented.

In order to achieve the above objects, according to the present invention, there is provided a memory card connector, in accordance with claim 1.

Preferably, the catching portion of the catch spring has a protruding portion. The lock plate is formed in a height so as to oppose to only the protruding portion of the catching portion.

Preferably, the protruding portion of the catching portion is rotated outside of the lock plate to move the slider for preventing the catching portion from striking the lock plate when the memory card is inserted in the memory card connector in an opposite direction.

In the above configurations, the catching portion of the catch spring will not strike the lock plate, and damage or deformation of the catch spring can be prevented.

Here, it is preferable that, a recessed part is formed on an inner side face of the slider. The catching portion is moved into the recessed part when the protruding portion of the catching portion is rotated outside of the lock plate.

In the above configuration, a range of free rotation of the catch spring will be enlarged, which will advantageously prevent deformation of the catch spring.

Preferably, the memory card connector further comprises:
a contact pin, connecting the memory card when the memory card is inserted to the contact position; and
a rib, formed around the contact pin for preventing an intrusion of the memory card when the memory card is inserted into the memory card connector in an opposite direction.

In the above configuration, damages of the contact pins which may occur when the memory card inserted in the opposite direction strikes the contact pins can be prevented, and more reliable fail-safe function will be attained.

Preferably, the catching portion moves outside of the inserting and extracting area of the memory card when the force greater than a predetermined force is applied to the catching portion in an extracting direction of the memory card in a state that the memory card is inserted to the contact position.

In the above configuration, when the memory card which is inserted is pulled by mistake, the catch spring will be disengaged from the recess of the memory card for permitting the memory card to be extracted. Therefore, damages of the catch spring and the slider lock mechanism can be prevented.

Preferably, the catching portion of the catch spring has a substantially V-shape formed by a rectilinear plane face.

Moreover, because the catching portion is in a substantially V-shape, when the memory card is extracted, the catching portion will be smoothly removed from the recess of the memory card, and durability of the catch spring will be enhanced.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a plan view of a base frame of a memory card connector, showing an embodiment according to the invention;
Fig. 2 is a plan view of the base frame in a state where a memory card is inserted;
Fig. 3 is a view as seen from a line A-A in Fig. 2;
Fig. 4 is a plan view of the base frame in a state where a memory card is inserted in an opposite direction;
Fig. 5 is a view as seen from a line A-A in Fig. 4;
Fig. 6 is a plan view of the base frame in a state where a memory card is extracted;
Fig. 7 is a perspective view of the memory card connector in a state where a memory card is inserted;
Fig. 8 is a plan view of a base frame of a memory card connector, showing a related example;
Fig. 9 is a perspective view of the memory card;
Fig. 10 is a bottom view of the memory card;
Fig. 11 is a plan view of the base frame in a state where the memory card is inserted, showing the related example; and
Fig. 12 is a plan view of the base frame in a state where the memory card is inserted in the opposite direction, showing the related example.

### DETAILED DESCRIPTION OF THE PREFERRED EMBODIMENTS

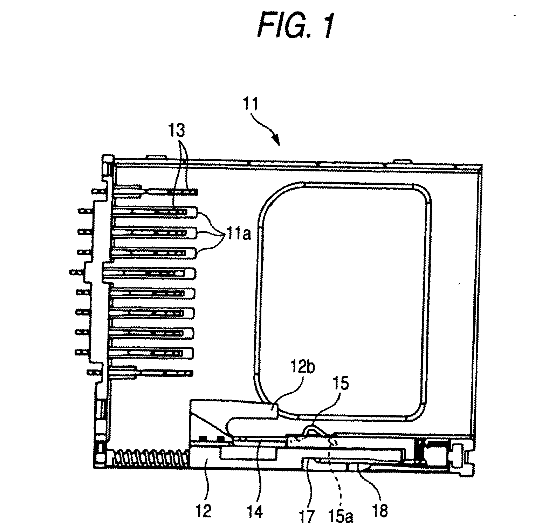

Now, a first embodiment of the invention will be described in detail referring to the drawings. Fig. 1 shows a base frame 11 of the memory card connector, in which arrangements of a slider 12 and contact pins 13 are the same as in the related memory card connector 1 illustrated in Fig. 8, but a catch spring 14 and a lock plate of a top cover which will be described below are different in shape. The base frame 11 is provided with a rib 11a surrounding the contact pins 13 so that the memory card may be abutted against the rib 11a in case where the memory card is inserted in an opposite direction, and insertion of the memory card may be hindered in front of the contact pins 13, and accordingly, damage of the contact pins 13 will be prevented.

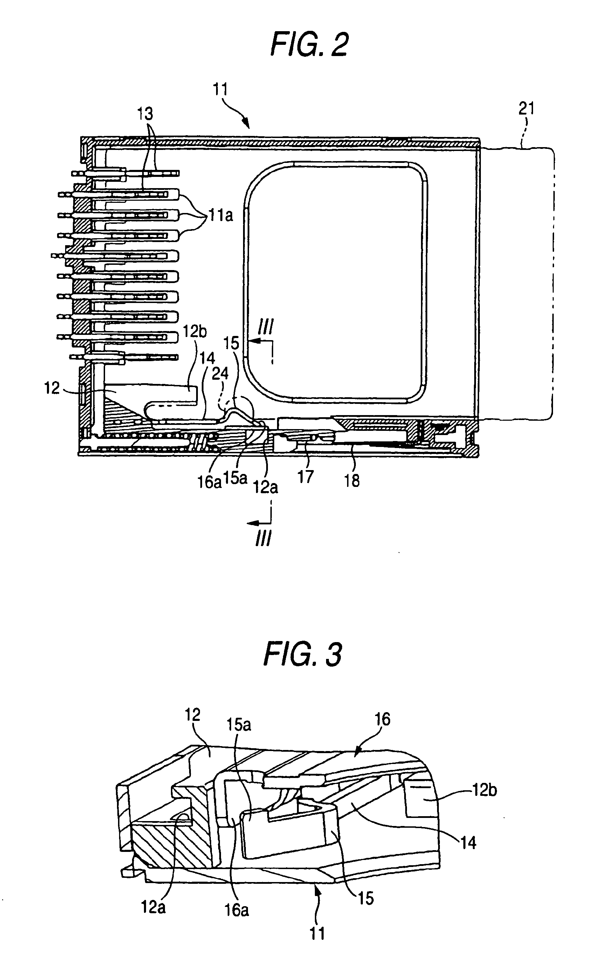

Fig. 2 shows the memory card 21 in a state inserted in a proper direction. In this state, the catching portion 15 of the catch spring 14 is engaged with the recess 24 on the left side face of the memory card 21, in the same manner as in the related case, and the slider 12 is pushed in, along with the memory card 21, thereby to bring the contacts of the memory card 21 into contact with the contact pins 13 of the memory card connector. Then, as shown in Figs. 2 and 3, an enlarged part 15a at a distal end of the catching portion 15 is abutted against a lock plate 16a formed on a top cover 16 and hindered from outward movement. As the results, the catching portion 15 is held so as not to be released from the recess 24 of the memory card 21, and at the same time, the slider 12 is secured in a locked position by a known slider lock mechanism which includes a heart-shaped groove cam 17 formed on a side face of the slider 12 and a lock pin 18 attached to the base frame 11, as shown in Fig. 2, and thus, the memory card 21 will be properly inserted.

Fig. 3 is a view as seen from a line A-A in Fig. 2. As shown in Fig. 3, the catch spring 14 has a stepped shape in an L-shape in which only an enlarged distal end part 15a of the catching portion 15 is formed higher. Moreover, the lock plate 16a suspended from the top cover 16 is shorter as compared with the related case, and positioned at such a height that the lock plate 16a may be opposed to only the enlarged distal end part 15a and may not interfere with other parts except the enlarged distal end part 15a. A distance in a vertical direction between the lock plate 16a and an inner bottom face of the base frame 11 is larger than a height of the other parts of the catch spring 14 except the enlarged distal end part 15a.

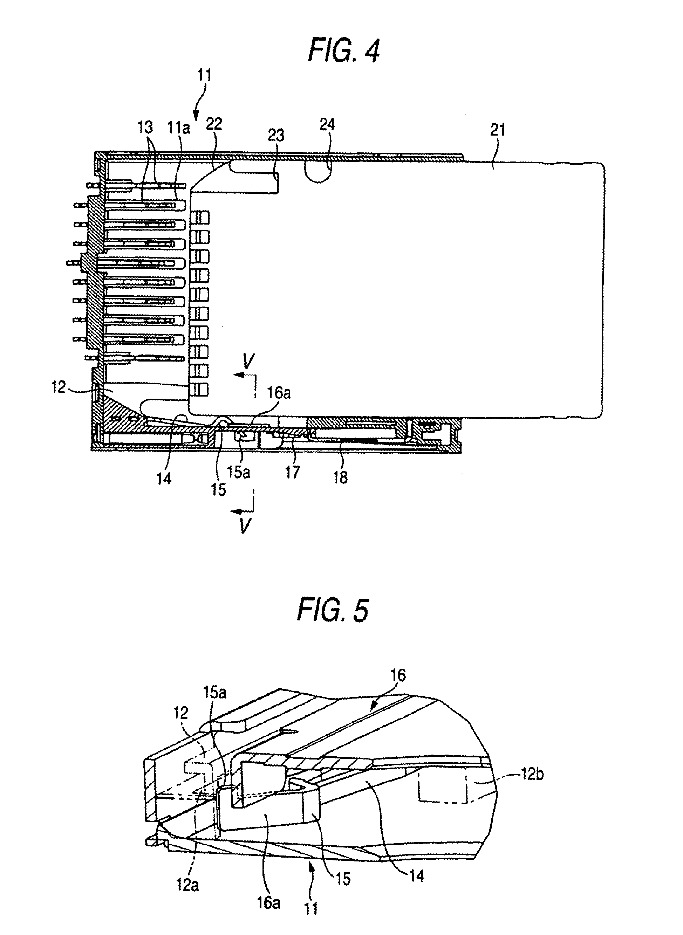

In case where the memory card is inserted upside down into the memory card connector, the catching part 15 of the catch spring 14 is first pressed with the side face of the memory card 21 to be rotated outwardly, and the distal end part of the catching portion 15 retreats into a recessed part 12a of the slider 12, as shown in Fig. 5. When the slider 12 slides backward, the distal end part 15a of the catching portion 15 moves outside of the lock plate 16a without contacting the lock plate 16a as shown in Fig. 5, and the memory card 21 which is inserted in the opposite direction as shown in Fig. 6 will be blocked by an arm portion 12b of the slider 12 to stop at a halfway of the insertion of the memory card 21. When the memory card 21 is withdrawn on this occasion, the slider 12 moves forward and returns to the initial position as shown in Fig. 1, and the catch spring 14 too will be restored from the outwardly flexed state to the initial state.

As described above, even in case where the slider 12 is retreated while the catch spring 14 is pressed with the memory card 21 inserted in the opposite direction to be rotated outwardly, the catching portion 15 of the catch spring 14 will not strike the lock plate 16a of the top cover 16. Therefore, damage or deformation of the catch spring on occasion that the memory card is inserted in the opposite direction can be prevented.

Moreover, in case where the memory card 21 inserted in the opposite direction as shown in Fig. 4 is further pushed with force, from the state where the memory card 21 is abutted against the arm portion 12b of the slider 12, and the memory card 21 is moved forward while deforming the arm portion 12b or riding over the arm portion 12b, the memory card 21 will be blocked by the rib 11a surrounding the contact pins 13 and stop the moving of insertion. Therefore, there will be no anxiety that the contact pins 13 may be broken.

Next, a second embodiment of the present invention will be described as follows. In this embodiment, the memory card in the case where outward pressure is applied on an apex of the catching portion 15 of the catch spring 14 in the locked state as shown in Figs. 2 and 3. When the outward pressure is applied on the apex of the catching portion 15 of the catch spring 14, the catch spring 14 will be flexed outwardly between a secured point and the enlarged distal end part 15a making them as pivots, and can retreat into a recessed part 12a of the slider 12.

Fig. 6 shows a state in which the memory card 21 which is inserted into the memory card connector is pulled in an extracting direction. The catching portion 15 of the catch spring 14 which is engaged with the recess on the side face of the memory card 21 will be flexed outwardly by extracting stress, and disengaged from the recess 24 of the memory card 21, allowing the memory card 21 to be extracted from the memory card connector. Therefore, different from the related inserting and extracting mechanism, the catch spring will not be bent, nor drop due to extraction of the memory card, or the slider 4 will not be pulled with force, without damaging the groove cam 17 and the lock pin 18 in the slider lock mechanism, and thus, damage of the memory card connector will be prevented.

Moreover, the catching portion 15 is in a substantially V-shape, having an inclined backward face (at a left side in the drawing) in a form of a rectilinear gentle slope which is different from the related shape having the face at an angle nearly vertical as shown in Fig. 8. Accordingly, when the memory card 21 is extracted, the catching portion 15 will be smoothly removed from the recess 24 of the memory card 21, and the extracting stress to be exerted on the catch spring 14 will be decreased, thereby enhancing durability of the catch spring.

It is to be noted that the invention is not limited to the above described embodiment, but, various modifications can be made within a technical scope of this invention, and that the modifications also belong to this invention.

## Claims

1. A memory card connector, comprising:
- a slider (12), being slidable in a direction in which a memory card (21) is inserted to and exerted from the memory card connector; and
- a catch spring (14), mounted on the slider (12), and having a catching portion (15) which is engageable with the memory card (21),
wherein the catching portion (15) is adapted to retreat outside of an inserting and extracting area of the memory card (21) when a force greater than a predetermined force is applied to the catching portion (15), and the slider (12) is formed with a recessed part (12a) wherein said catching portion (15) can retreat
**characterized by**
a lock plate (16a), adapted for holding an engagement between the catching portion (15) and the memory card (21) when the memory card (21) is inserted to a position of contacting with the memory card connector, and the recessed part (12a) of the slider (12) allows the catching portion (15) to retreat therein when the card is inserted upside down which leads the catching portion (15) outside of the lock plate (16a).

2. The memory card connector as set forth in claim 1, **characterized in that** the catching portion (15) of the catch spring (14) has a protruding portion (15a); and
wherein the lock plate (16a) is formed in a height so as to be opposed to only the protruding portion (15a) of the catching portion (15).

3. The memory card connector as set forth in claim 2, **characterized in that** the protruding portion (15a) of the catching portion (15) is rotated outside of the lock plate (16a) to move the slider (12) for preventing the catching portion (15) from striking the lock plate (16a) when the memory card is inserted in the memory card connector upside down.

4. The memory card connector as set forth in claim 3, **characterized in that** the recessed part (12a) is formed on an inner side face of the slider (12); and
wherein the catching portion (15) is retreated into the recessed part (12a) when the protruding portion (15a) of the catching portion (15) is rotated outside of the lock plate (16a).

5. The memory card connector as set forth in claim 1, further comprising:
- a contact pin (13), connecting the memory card (21) when the memory card (21) is inserted to the contact position; and
- a rib (11 a), formed around the contact pin (13) for preventing an intrusion of the memory card (21) when the memory card (21) is inserted into the memory card connector in an opposite direction.

6. The memory card connector as set forth in claim 1, **characterized in that** the catching portion (15) retreats outside of the inserting and extracting area of the memory card (21) when the force greater than a predetermined force is applied to the catching portion (15) in an extracting direction of the memory card (21) in a state that the memory card (21) is inserted to the contact position.

7. The memory card connector as set forth in claim 1, **characterized in that** the catching portion (15) of the catch spring (14) has a substantially V-shape formed by a rectilinear plane face.

## Patentansprüche

1. Speicherkarten-Verbinder, der umfasst:
einen Schieber (12), der in einer Richtung verschoben werden kann, in der eine Speicherkarte (21) in den Speicherkarten-Verbinder eingeführt und aus ihm herausgezogen werden kann; und
eine Einschnappfeder (14), die an dem Schieber (12) angebracht ist und einen Einschnappabschnitt (15) hat, der mit der Speicherkarte (21) in Eingriff gebracht werden kann,
wobei der Einschnappabschnitt (15) so eingerichtet ist, dass er sich außerhalb eines Einführ- und Herausziehbereichs der Speicherkarte (21) zurückzieht, wenn eine Kraft, die größer ist als eine vorgegebene Kraft, auf den Einschnappabschnitt (15) ausgeübt wird, und der Schieber (12) mit einem ausgesparten Teil (12a) versehen ist, in den sich der Einschnappabschnitt (15) zurückziehen kann,
**gekennzeichnet durch**
eine Arretierplatte (16a), die so eingerichtet ist, dass sie einen Eingriff zwischen dem Einschnappabschnitt (15) und der Speicherkarte (21) aufrechterhält, wenn die Speicherkarte (21) an eine Position eingeführt wird, an der sie mit dem Speicherkarten-Verbinder in Kontakt kommt, und der ausgesparte Teil (12a) des Schiebers (12) zulässt, dass sich der Einschnappabschnitt (15) darin zurückzieht, wenn die Karte umgekehrt eingeführt wird, wodurch sich der Einschnappabschnitt (15) außerhalb der Arretierplatte (16a) befindet.

2. Speicherkarten-Verbinder nach Anspruch 1, **dadurch gekennzeichnet, dass** der Einschnappabschnitt (15) der Einschnappfeder (14) einen vorstehenden Abschnitt (15a) hat; und
wobei die Arretierplatte (16a) in einer Höhe ausgebildet ist, in der sie nur dem vorstehenden Abschnitt (15a) des Einschnappabschnitts (15) gegenüberliegt.

3. Speicherkarten-Verbinder nach Anspruch 2, **dadurch gekennzeichnet, dass** der vorstehende Abschnitt (15a) des Einschnappabschnitts (15) außerhalb der Arretierplatte (16a) gedreht wird, um den Schieber (12) so zu bewegen, dass verhindert wird, dass der Einschnappabschnitt (15) auf die Arretierplatte (16a) aufschlägt, wenn die Speicherkarte umgekehrt in den Speicherkarten-Verbinder eingeführt wird.

4. Speicherkarten-Verbinder nach Anspruch 3, **dadurch gekennzeichnet, dass** der ausgesparte Teil (12a) an einer Innenseitenfläche des Schiebers (12) ausgebildet ist; und
wobei der Einschnappabschnitt (15) in den ausgesparten Teil (12a) zurückgezogen wird, wenn der vorstehende Abschnitt (15a) des Einschnappabschnitts (15) außerhalb der Arretierplatte (16a) gedreht wird.

5. Speicherkarten-Verbinder nach Anspruch 1, der des Weiteren umfasst:
einen Kontaktstift (13), der die Verbindung der Speicherkarte (21) herstellt, wenn die Speicherkarte (21) an die Kontaktposition eingeführt ist; und
eine Rippe (11a), die um den Kontaktstift (13) herum ausgebildet ist, um ein Eindringen der Speicherkarte (21) zu verhindern, wenn die Speicherkarte (21) in einer entgegengesetzten Richtung in den Speicherkarten-Verbinder eingeführt wird.

6. Speicherkarten-Verbinder nach Anspruch 1, **dadurch gekennzeichnet, dass** sich der Einschnappabschnitt (15) aus dem Einführ- und Herausziehbereich der Speicherkarte (21) zurückzieht, wenn die Kraft, die größer ist als eine vorgegebene, auf den Einschnappabschnitt (15) in einer Herausziehrichtung der Speicherkarte (21) in einem Zustand ausgeübt wird, in dem die Speicherkarte (21) an die Kontaktposition eingeführt ist.

7. Speicherkarte nach Anspruch 1, **dadurch gekennzeichnet, dass** der Einschnappabschnitt (15) der Einschnappfeder (14) eine im Wesentlichen V-artige Form hat, die durch eine geradlinige plane Fläche gebildet wird.

## Revendications

1. Connecteur de carte mémoire, comportant :
- une glissière (12) pouvant glisser dans une direction dans laquelle une carte mémoire (21) est insérée et exercée par le connecteur de carte mémoire ; et
- un ressort à déclic (14) monté sur la glissière (12), et possédant une partie d'encliquetage (15) qui peut venir en engagement dans la carte mémoire (21),
dans lequel la partie d'encliquetage (15) est adaptée pour se rabattre à l'extérieur d'une zone d'insertion et d'extraction de la carte mémoire (21) lorsqu'une force supérieure à une force prédéterminée est appliquée à la partie d'encliquetage (15), et la glissière (12) est formée avec une partie évidée (12a) dans laquelle ladite partie d'encliquetage (15) peut se rabattre
**caractérisé par**
une plaque de verrouillage (16a) adaptée pour maintenir un engagement entre la partie d'encliquetage (15) et la carte mémoire (21) lorsque la carte mémoire (21) est insérée dans une position de contact avec le connecteur de carte mémoire, et la partie évidée (12a) de la glissière (12) permet à la partie d'encliquetage (15) de se rabattre à l'intérieur lorsque la carte est insérée de façon inversée qui conduit la partie d'encliquetage (15) à l'extérieur de la plaque de verrouillage (16a).

2. Connecteur de carte mémoire selon la revendication 1, **caractérisé en ce que** la partie d'encliquetage (15) du ressort à déclic (14) possède une partie saillante (15a) ; et dans lequel la plaque de verrouillage (16a) est formée à une hauteur de manière à être opposée seulement à la partie saillante (15a) de la partie d'encliquetage (15).

3. Connecteur de carte mémoire selon la revendication 2, **caractérisé en ce que** la partie saillante (15a) de la partie d'encliquetage (15) est pivotée à l'extérieur de la plaque de verrouillage (16a) pour déplacer la glissière (12) afin d'empêcher la partie d'encliquetage (15) de heurter la plaque de verrouillage (16a) lorsque la carte mémoire est insérée dans le connecteur de carte mémoire de façon inversée.

4. Connecteur de carte mémoire selon la revendication 3, **caractérisé en ce que** la partie évidée (12a) est formée sur une face latérale interne de la glissière (12) ; et dans lequel la partie d'encliquetage (15) est rabattue dans la partie évidée (12a) lorsque la partie saillante (15a) de la partie d'encliquetage (15) est pivotée à l'extérieur de la plaque de verrouillage (16a).

5. Connecteur de carte mémoire selon la revendication 1, comportant en outre :
- une broche de contact (13) reliant la carte mémoire (21) lorsque la carte mémoire (21) est insérée dans la position de contact ; et
- une nervure (11a) formée autour de la broche de contact (13) pour empêcher une intrusion de la carte mémoire (21) lorsque la carte mémoire (21) est insérée dans le connecteur de carte mémoire dans une direction opposée.

6. Connecteur de carte mémoire selon la revendication 1, **caractérisé en ce que** la partie d'encliquetage (15) est rabattue à l'extérieur de la zone d'insertion et d'extraction de la carte mémoire (21) lorsque la force supérieure à une force prédéterminée est appliquée à la partie d'encliquetage (15) dans une direction d'extraction de la carte mémoire (21) dans un état dans lequel la carte mémoire (21) est insérée dans la position de contact.

7. Connecteur de carte mémoire selon le revendication 1, **caractérisé en ce que** la partie d'encliquetage (15) du ressort à déclic (14) présente sensiblement une forme en V formée par une face plane rectiligne.
